# EUROPÄISCHE PATENTANMELDUNG

(11) **EP 0 849 852 A1**
(43) Veröffentlichungstag der Anmeldung: **24.06.1998**
(21) Anmeldenummer: 96120487.2
(22) Anmeldetag: 19.12.1996
(51) Int. Cl.: H02G 3/06

(54) **Verbinder eines Schutzschlauchsystems mit Zugang für innenverlegte elektrische Leitungen im Flugzeug**

(71) Anmelder: Daimler-Benz Aerospace Airbus Gesellschaft mit beschränkter Haftung, 21129 Hamburg (DE)
(72) Erfinder: Kirma, Safa, 22280 Wedel/Holstein (DE)
(74) Vertreter: Hansmann, Dierk, Dipl.-Ing.

(57) **Zusammenfassung**

Die Erfindung bezieht sich auf den Verbinder eines Schutzschlauchsystems mit Zugang für innenverlegte Leitungen in einem Flugzeug.

Mit ihr lassen sich die Installations- und Inspektionsöffnungen - ohne Demontage der Teilkomponenten des Verbinders eines Blitzschutzsystems oder der mit ihm verzweigten Verbinder des Systems und ohne Unterbrechung des Betriebes - beliebig Öffnen und Schließen, wobei sich der mechanische Schutz der isolierten elektrischen Leitungen, die unterhalb der Öffnungen installiert sind, sachgemäß und kurzfristig - ohne besonderen Aufwand - realisieren läßt.

Der Verbinder besteht grundsätzlich aus einem Grundkörper, dessen Querschnitt zur Aufnahme von gebündelten isolierten elektrischen Leitungen vorgesehen ist. Der Grundkörper weist mehrere Abschnitte auf, wobei einem Mittelabschnitt, der mit einer Öffnung versehen ist, mehrere geschlossene Randabschnitte abgezweigt sind. Die Öffnung läßt sich mit einem Verschluß, der verschiedenartig gestaltet ist und die Öffnung gänzlich überdeckt, verschließen. Er liegt der Öffnung vorwiegend unverlierbar auf.

## Beschreibung

Die Erfindung bezieht sich auf den Verbinder eines Schutzschlauchsystems mit Zugang für innenverlegte elektrische Leitungen im Flugzeug. Unterhalb einer Installations- und Inspektionsöffnung des Verbinders erfolgt die sachgemäße Installation elektrischer Leitungen, insbesondere bei richtungsveränderlicher Verlegung innerhalb des Verbinders, die bei verschlossener Öffnung wirksam gegen das Eindringen fremder Körper geschützt liegen.

Verbindungen von elektrischen Leitungen sind so auszuführen, daß sie allgemein den verschiedenartig einwirkenden Beanspruchungen standhalten. Deshalb werden elektrische Leitungsbündel an verschiedenen Stellen im Flugzeug geschützt verlegt, um sie auch gegenüber äußeren mechanischen Einwirkungen effizient zu schützen. Im Flugzeugbau sind Verlegetechnologien bekannt, wonach die elektrischen Leitungen an elektrische und / oder mechanische Verbinder auf engstem Raum geschützt verlegt sind. Das geschieht mittels geschützter Verlegung der elektrischen Leitungen in Schutzschläuchen oder durch zusätzliche Führung dieser Leitungen an die entsprechende(n) Verbinder bzw. Gerätetechnik. Die bekannten Verbinder bieten keine geeigneten Maßnahmen an, wonach ohne großen Aufwand ein beliebiges Öffnen und Schließen der Installations- und Inspektionsöffnungen eines Verbinders durchgeführt werden kann. Dieser Mangel behindert wesentlich die Arbeiten bzw. die Kontrolle bei der Störungsbeseitigung oder Routineüberprüfung der elektrischen Systeme, weil eine Sicht- oder meßtechnischer Leitungskontrolle an den installierten elektrischen Leitungen nachteiligerweise die Demontage der Teilkomponenten eines oder mehrerer Verbinder erfordert und zur Unterbrechung des Betriebes führt. Die anschließende Schließung der Installations- und Inspektionsöffnungen erfordert zusätzlichen Aufwand, um die vorher freigelegten elektrischen Leitungen sachgemäß gegen mechanische Einwirkungen zu schützen. Die Nachteile dieser bekannten Technologie wirken beim Flugzeughersteller und -betreiber bei Störungen , Fehlersuche und Reparatur im elektrischen System gleichermaßen nachteilig.

Verbinder mit verschließ- und lösbarer Öffnung sind aus den US 4,671,598; GB 2 016 215; FR 1 142 856 und CH 526 215 für elektrisch Leitungen bekannt. Diese besitzen ein rohrförmig geteiltes Übergangsformstück, das erst nach dem Lösen der beiden Formstückhälften eine Inspektion der elektrischen Leitungen gestattet. Dabei wird die gegenseitige Befestigung der Formstückhälften unterschiedlich aufwendig gelöst, wobei der Zugang zu den elektrischen Anschlußleitungen des Verbinders nur durch aufwendige Demontage der Formstückhälften möglich wird.
Nach der US 4,671,598 erfolgt die Fixierung der Formstückhälften durch einen Ring, die sich mit zwei zusammensetzbaren Hälften zu einem Stutzen, die den Formstückhälften angeformt sind, verschrauben läßt. Ähnlich der Lösung nach der US 4,671,598 werden nach der GB 2 016 215 zwei Formstückhälften zusammengesetzt, die mittels einer Hülse fixiert werden. Nach der FR 1 142 856 und CH 526 215 sind Verbinder aus Halbschalen bekannt geworden. Die Halbschalen verbinden getrennte Führungskanäle und sind mit einem gattungsgemäßen Verbinder nicht vergleichbar.

Die Lösungen der vorgestellten Druckschriften besitzen den Mangel, daß der Zugang zu den elektrischen Leitungen besonders erschwert wird. Der Zugang läßt sich nur durch aufwendige Demontage einzelner Elemente und Unterbrechung des Betriebes realisieren. Dabei läßt sich die Demontage und anschließende Montage der Elemente nur mit erhöhtem Aufwand erledigen. Ebenso treffen bei diesen Lösungen alle vorbeschriebenen Nachteile bezüglich der allgemein im Flugzeugbau bekannten Verbinder zu.

Demzufolge liegt der Erfindung die Aufgabe zugrunde, einen gattungsgemäßen Verbinder für ein Schlauchsystem im Flugzeug derart zu gestalten, daß sich die Installations- und Inspektionsöffnungen - ohne Demontage der Teilkomponenten des Verbinders eines Blitzschutzsystems oder der mit ihm verzweigter Verbinder des Systems und ohne Unterbrechung des Betriebes - beliebig Öffnen und Verschließen lassen, wobei sich der mechanische Schutz der elektrischen Leitungen, die unterhalb der Öffnungen installiert sind, sachgemäß und kurzfristig - ohne besonderen Aufwand - realisieren läßt.

Die Aufgabe wird durch die kennzeichnenden Merkmale der Ansprüche 1, 7, 12, 18 und 22 gelöst. In den weiteren Unteransprüchen sind zweckmäßige Ausgestaltungen dieser Maßnahmen genannt.

Die Erfindung ist in fünf Ausführungsbeispielen anhand der Zeichnungen näher beschrieben.
Es zeigen in einem ersten Ausführungsbeispiel:
- Fig.1: den Verbinder mit jeweils einer drehbeweglich gelagerten Buchse und einer Überwurfmutter sowie mit einer im Mittelabschnitt längsgeschlitzt eingefaßten Installations- und Inspektionsöffnung, dem über der gesamten Öffnung das Federband einer Rollfeder aufliegt, wobei der Verbinder die Form eines 90 - Grad - Krümmers besitzt;
- Fig.1a: den Verbinder nach Fig.1 in der Schnittdarstellung A - B eines Randabschnittes mit Darstellung des aufgesetzten Hakens zur Befestigung des eingerollten Endes des Federbandes;
- Fig.1b: den Verbinder nach Fig.1 in der U- förmigen Querschnittsdarstellung unterhalb der Installations- und Inspektionsöffnung und mit der Darstellung der sachgemäßen Installation der elektrischen Leitungen und deren Befestigung mit einem Kabelbinder;
- Fig.1c: den Mittelabschnitt des Verbinders mit eingefaßter Installations- und Inspektionsöffnung, an dessen Innenkanten über der gesamten Öffnung des längsgeschlitzten U- Profiles eine Nut eingelassen ist, der das Federband bei verschlossener Öffnung aufliegt.

Eine zweite Ausführungsform zeigt nach
- Fig.2: den Verbinder mit jeweils einer drehbeweglich gelagerten Buchse und einer Überwurfmutter sowie mit der Darstellung der 45 - Grad - Krümmung des Mittelabschnittes, der eine längsgeschlitzt eingefaßte Installations- und Inspektionsöffnung aufweist und dem über der gesamten Öffnung das Federband einer Rollfeder aufliegt, wobei der Verbinder die Form eines 45 - Grad - Krümmers besitzt.

Eine dritte Ausführungsform zeigt nach
- Fig.3: den Verbinder nach der Fig.1, bei dem das Profil eine Formveränderung aufweist, wobei der Mittelabschnitt mit längsgeschlitzt eingefaßter Installations- und Inspektionsöffnung eine 180 - Grad - Krümmung besitzt, dem über der gesamten Öffnung das Federband einer Rollfeder aufliegt.

In einem zweiten Ausführungsbeispiel wird nach
- Fig.4: der Verbinder als 90 - Grad - Krümmer mit jeweils einer drehbeweglich gelagerten Buchse sowie mit einer im Mittelabschnitt längsgeschlitzt eingefaßten Installations- und Inspektionsöffnung dargestellt, dem über der gesamten Öffnung ein Deckel aufliegt, welcher durch einen ihm aufliegenden federbelasteten Druckring gesichert ist.

Eine weitere Ausführungsform zeigt nach
- Fig.4a: den modifizierten Verbinder nach Fig.4 mit der Installations- und Inspektionsöffnung aufliegenden Deckel und mit Darstellung zweier Teilflansche, die dem Deckel und dem betreffenden geschlossenen Randabschnitt nahe dem Öffnungsende aufgesetzt sind, wobei zwischen den Stirnflächen der Teilflansche eine Schraubenfeder geführt ist, die unverlierbar befestigt ist.

In einem dritten Ausführungsbeispiel wird nach
- Fig.5: der Verbinder als Kabelabzweiger dargestellt, dessen Mittelabschnitt an der Oberkante mit einer kreisförmigen Installations- und Inspektionsöffnung versehen ist, welche sich mit einem kreisrunden Deckel verschließen läßt, wobei den abgezweigten Randabschnitten jeweils eine drehbeweglich gelagerte Buchse aufliegt;
- Fig.5a: der Deckel des Kabelabzweigers als kreisrunde ebenflächige Scheibe gezeigt, den ein Seegerring sichert;
- Fig.5b: der Deckel im Schnitt A - B nach Fig.5a gezeigt, wobei zusätzlich die Scherung des Deckels mit dem Seegerring innerhalb der Installations- und Inspektionsöffnung dargestellt ist.

Eine weitere Ausführungsform zeigt nach
- Fig.5c: die Gestaltung des Deckels als Kappe mit ihm mittig aufgesetztem Befestigungshaken zur unverlierbaren und flexiblen Befestigung mit dem Abzweiger.

In einem vierten Ausführungsbeispiel wird nach
- Fig.6: der Verbinder als Kabelabzweiger dargestellt, dessen Mittelabschnitt an der Oberkante mit einer kreisförmigen Installations- und Inspektionsöffnung versehen ist, welche sich mit einem nahezu kreisrunden Deckel verschließen läßt, der sich mit einer ihm aufliegenden Schenkelfeder verschwenken läßt;
- Fig.6a: der Verbinder als Kabelabzweiger im Schnitt C - D nach Fig.6 dargestellt, aus der sich die Anordnung und Fixierung der Schenkelfeder auf einem Bolzen, der einem Randabschnitt aufsitzt, erkennen läßt;
- Fig.6b: der Verbinder als Kabelabzweiger im Schnitt A - B nach Fig.6 dargestellt, der die Verriegelung des Deckels mit einem Federschenkel auf einem weiteren Randabschnitt zeigt.

In einem fünften Ausführungsbeispiel wird nach
- Fig.7: der Verbinder als Kabelabzweiger dargestellt, dessen Mittelabschnitt dosenförmig ausgebildet und mit einer kreisförmigen Installations- und Inspektionsöffnung versehen ist;
- Fig.7a: der Verbinder als Kabelabzweiger im Schnitt A - B nach Fig.7 gezeigt, wonach ein kreisrunder Deckel die Installations- und Inspektionsöffnung verschließt, der zu seiner Bewegung ein am Mittelabschnitt befestigtes Scharniergelenk und diesem gegenüberliegend einen rechtwinklig abgewinkelten Verschlußstreifen aufweist, welcher zur Fixierung des Deckels einer Lasche unterführt wird.

In einem Flugzeug werden allgemein isolierte elektrische Leitungen (Hilfs- und Steuerleitungen) häufig in Schutzschläuchen verlegt, um sie gegen äußere mechanische Wirkungen zu schützen. Diese leitungsführenden Schutzschlauchverbindungen werden aus Gründen der zweckmäßigsten Leitungsführung häufig wegen Richtungsänderungen an winklige Verbinder, die auch als Kabelabzweiger ausgeführt sind, installiert. Geschlossene Verbinder, die dem Verlauf der Installation eine gewollte Richtungsänderung ermöglichen, besitzen den Nachteil, daß - bei nicht sachgemäßer Verlegung der elektrischen Leitungen - deren Zugänglichkeit inner- und außerhalb der Verbinder nur beschwerlich und dann mit Unterbrechung des Betriebes erfolgen kann. Deshalb besitzen winklige Verbinder bzw. Kabelabzweiger, die mit einer Installations- und Inspektionsöffnung versehen sind, eine besondere Bedeutung. Mit ihnen wird die prophylaktische Überprüfung oder die Kontrolle von Leitungsverbindungen praktisch sehr erleichtert, was gleichbedeutend eine Erleichterung der Arbeitsbedingungen, in praxi bei der Untersuchung gestörten Leitungssysteme an Bord eines Flugzeuges, bedeutet. Günstigerweise können dann die Arbeiten somit unmittelbar an den unterhalb der Installations- und Inspektionsöffnungen installierten elektrischen Leitungen vorgenommen werden. Nach Abschluß der genannten Tätigkeiten werden die Installations- und Inspektionsöffnungen ohne großen Aufwand und ohne zusätzliches Werkzeug mit einem geeigneten Verschluß verschlossen, damit die elektrischen Leitungen nicht den Einflüssen äußerer (plötzlicher) mechanischer Einwirkungen, beispielsweise durch Fremdkörper, unterliegen. Die Verschlüsse zur Schließung der Öffnungen sind am Verbinder unverlierbar zu befestigen, wobei (ergänzenderweise) die installierten elektrischen Leitungen am Boden des Verbinders fixiert werden. Mit Kabelbindern kann man die mechanisch vorgespannten elektrischen Leitungen (bedingt durch die Richtungsänderung) nach einer sachgemäßen Verlegung innerhalb des Verbinders befestigen, da Erschütterungen und ständige Vibrationen während des Flugbetriebes die elektrischen Leitungen heftig gegen die Innenwandung des Verbinders schlagen und beschädigen können. Durch die Verschlußgestaltung der (mit einer Installations- und Inspektionsöffnung versehenen) Verbinder kann außerdem während der Fertigung und im installierten (eingebauten) Zustand der Leitungen und Geräte(systeme) mit minimalem manuellen Aufwand und ohne Werkzeugbenutzung ein beliebiges Öffnen und Schließen der Installations- und Inspektionsöffnung - ohne Unterbrechung des Betriebes - durchgeführt werden.

Bei Störung, Fehlersuche, Messung und Reparatur am elektrisch betriebenen Teil des Bordsystems eines Flugzeuges besitzt ein mit einer Installations- und Inspektionsöffnung versehener winkliger Verbinder bzw. als Kabelverteiler ausgeführter Verbinder für den Flugzeughersteller bzw. -halter( -betreiber) eine gleichermaßen wichtige Funktion.

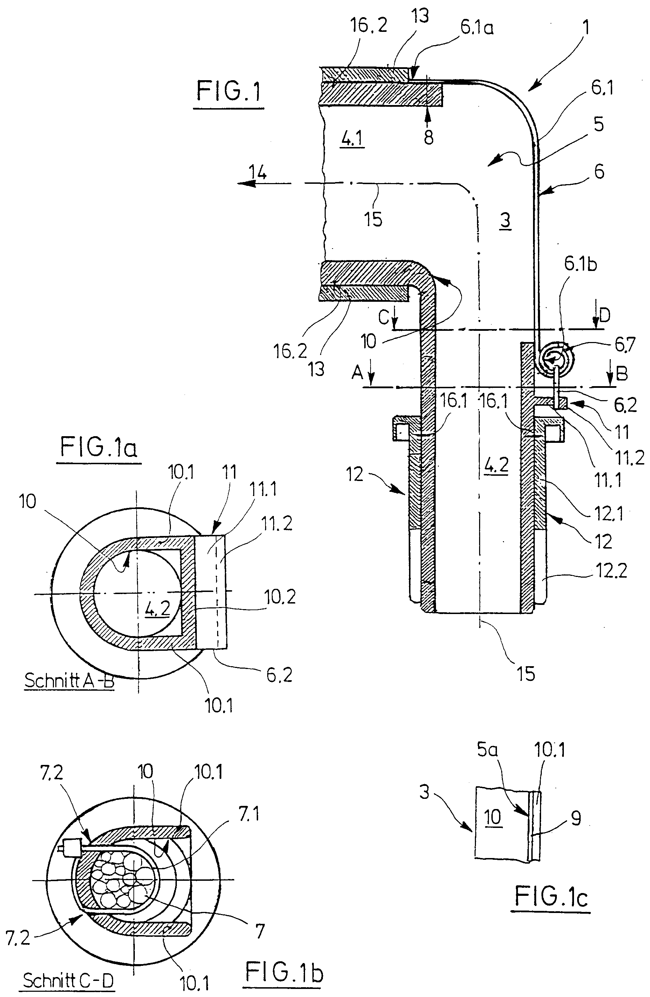

In einem **ersten Ausführungsbeispiel** wird nach Fig. 1 der Verbinder 1 eines Schutzschlauchsystems mit Zugang für (nicht gezeigte) innenverlegte elektrische Leitungen 7 im Flugzeug näher beschrieben. Danach besteht der Verbinder 1 aus einem Grundkörper, der beispielgemäß die Form eines 90 - Grad - Krümmers aufweist. Zwischen den beiden äußeren Randabschnitten 4.1, 4.2 des Grundkörpers befindet sich ein Mittelabschnitt 3. Die Randabschnitte 4.1, 4.2 sind geschlossen ausgeführt, wogegen der Mittelabschnitt 3 längs einer Mittelachse 15 des Grundkörpers eine Installations- und Inspektionsöffnung 5 aufweist, die beispielgemäß als axial verlaufende (Längs-) Schlitzung (dem Verlauf der Mittelachse 15 des Grundkörpers entsprechend) ausgeführt ist und bis an den Übergang zum betreffenden Randabschnitt 4.1, 4.2 reicht. Jeweils eine bizonal aufgeteilte Buchse 12 oder eine Überwurfmutter 13 lagert koaxial und drehbeweglich auf den betreffenden Randabschnitten 4.1, 4.2 . Der Grundkörper und das dem jeweiligen Randabschnitt 4.1, 4.2 zugeordnete Element (Buchse 12, Überwurfmutter 13) sind mittels je einem Sprengring 16.1, 16.2 fest und unverlierbar zueinander fixiert, wobei diese sich jeweils in einer separat eingelassenen Nut, die in die zueinander liegenden (geschlossen ausgeführten) Auflagefächen der zueinander drehbeweglich gelagerten Körper eingearbeitet ist, befinden. Der Grundkörper und die Überwurfmutter 13 oder die Buchse 12 liegen (infolge der Sprengringfixierung) immer drehbeweglich zueinander.
Die Überwurfmutter 13, welche auf einem ersten Randabschnitt 4.1 liegt, fixiert den Verbinder mit einem (nicht gezeigten) elektrischen Stecker 14.
Die erwähnte Buchse 12 ist bizonal in eine axial geschlossene und axial geschlitzte Zone 12.1, 12.2 aufgeteilt. Die axial geschlitzte Zone 12.2 besteht aus mehreren schlitzartig gebildeten Elementen, die als elektrisch leitende Kontaktfedern ausgebildet sind. Der andere zweite Randabschnitt 4.2, auf dem die Buchse 12 lagert, ist dabei mit den unter Druck gesetzten Kontaktfedern - infolge ihres radial verteilten Aufdrückens auf diesen Bereich des Grundkörpers - elektrisch leitend verbunden, wobei die den Kontaktfedern aufgeprägte Last mit radial aufgeprägter Druckverteilung wirkt.

Ein (nicht gezeigter) metallener Schutzschlauch, der auf der drehbeweglichen Buchse 12 befestigt ist, realisiert die elektrisch leitende Verbindung zwischen dem Verbinder 1 und einem Schutzschlauchsystem.
Das Profil des Grundkörpers wird (im besonderen) dadurch charakterisiert, daß es im Mittelabschnitt 3 unterhalb der Installations- und Inspektionsöffnung 5 gänzlich oder teilweise U- oder C- förmig gestaltet ist, durch dessen Querschnitt die (bei nicht verschlossener Öffnung) direkt zugänglich verlegten (nicht gezeigten) elektrischen Leitungen 7 bei Systemausfällen oder Routinekontrollen - ohne Unterbrechung des Betriebes und Demontage der Anschlußteile - sofort überprüft werden können.

Nahe dem freien Ende des zweiten Randabschnittes 4.2 befindet sich oberhalb dieses Abschnittes ein ihm senkrecht fest aufsitzender Haken 11, der flanschartig aufsitzt. An den Rand des angesetzten Flanschansatz 11.1 ist ein Ansatzstück 11.2 angeformt, das sich dem Mittelabschnitt 3 abwendet. Dieser Haken 11, der sich aus dem Flanschansatz 11.1 und dem ihm angeformten Ansatzstück 11.2 zusammengesetzt, wird zur Fixierung eines flexiblen Verschlußes 6 benötigt, den man aus dem Federband 6.1 einer Rollfeder 6.7 gestaltet. Durch den Verschluß 6 werden die unterhalb der Installations- und Inspektionsöffnung 5 installierten (nicht gezeigten) elektrischen Leitungen 7 (primär) gegen das Eindringen fremder Körper geschützt. Der Verschluß 6 liegt der Öffnung 5 auf und überdeckt sie gänzlich.
Entlang des beispielgemäß gewählten U- Profiles, das sich unterhalb der längsgeschlitzten Installations- und Inspektionsöffnung 5 befindet, liegt eine Nut 9, die an den Innenkanten der freien Enden 5a der beiden Schenke 10.1 eingelassen ist. Dieser Nut 9 liegt das Federband 6.1 der Rollfeder 6.7 auf und überdeckt dabei im ausgerollten Zustand gänzlich die Öffnung 5. Das (erste) freie Ende 6.1a des Federbandes 6.1 wird nahe dem Beginn der Installations- und Inspektionsöffnung 5 mit einem Verrbindungselement 8 am ersten äußeren Randabschnitt 4.1 (unverlierbar) befestigt. Am ausgerollten zweite Ende 6.1b des Federbandes 6.1 befindet sich lose befestigt eine Öse 6.2, welche an dem erwähnten Haken 11 - unterhalb dem kuppenförmig ausgebildeten Absatzstück 11.2 und aufliegend dem Flanschansatz 11.1 - , am anderen zweiten äußeren Randabschnitt 4.2 festgemacht wird. Durch die Federrückstellkraft erfolgt eine sichere (unverlierbare) Befestigung des Federbandes 6.1 am zweiten Randabschnitt 4.2.

Beispielgemäß wird ein Federband 6.1 der Rollfeder 6.7, das der Nut 9 eben oder leicht gewölbt aufliegt, zum Verschließen der Installations- und Installationsöffnung 5 eingesetzt. Nach dem Aufheben der Ösenbefestigung am Haken 11 rollt sich das Federband 6.1 - durch seine eigene Federrückstellkraft - selbständig in Ausgangsposition, das heißt, in Richtung seines freien Endes 6.1a ein.

Die Fig. 1a zeigt den vorbeschriebenen Verbinder 1 nach der Fig.1 im Schnitt A - B in der U-förmigen Querschnittsdarstellung, aus der sich weiterhin die Darstellung des Hakens 11, der dem geschlossenen Profil des zweiten äußeren Randabschnitt 4.2 aufgesetzt ist, entnehmen läßt. Dabei sieht man, daß quer der beiden Schenkeln 10.1 des U-Profiles ein Deckprofil 10.2 liegt, welches an dieser Stelle (nahe dem Beginn der Installations- und Inspektionsöffnung 5) als Flachprofil diesen Schenkel 10.1 fest angesetzt ist und beide überbrückt. Dabei steht der Haken 11 senkrecht auf dem Deckprofil, welcher über die Breite des (Flach)-Profiles) fest mit diesem verbunden ist.

Die Fig.1b zeigt ergänzend der Ausführungen nach Fig.1 in Querschnittdarstellung C - D die Lage und Befestigung der elektrischen Leitungen 7 innerhalb des Mittelabschnittes 3 und unterhalb der Installations- und Inspektionsöffnung 5. Dabei befinden sich am Boden des beispielgemäßen U- Profiles mindestens zwei (das Profil durchdringende) Schlitze 7.2, die im (zwischen den beiden Schenkeln 10.1) liegenden definierten Abstand eingearbeitet sind. Diese Schlitze 7.2, die sich axial entlang der Innenwandung 10 des U- Profiles im Bereich des Mittelabschnittes 3 unterhalb der Installations- und Inspektionsöffnung 5 verteilen, werden zur Fixierung der sachgemäßen Installation der elektrischen Leitungen 7 mittels der Kabelbinder 7.1 am Boden des U- Profiles benötigt. Dabei werden die freien Enden der Kabelbinder 7.1 durch die Schlitze 7.2 gefädelt, wodurch die so befestigten elektrischen Leitungen 7 sachgemäß befestigt und wesentlich gegen mögliche von außen einwirkende Erschütterungen und Vibrationen auf den Verbinder 1 geschützt sind.

Die Fig.1c zeigt den Teilschnitt des - mit der Installations- und Inspektionsöffnung 5 versehenen - geschlitzten Mittelabschnittes 3, dessen Innenwandung 10 unterhalb der Öffnung 5 freiliegt. Es wird ein Schenkel 10.1 des U- Profiles mit der eingelassenen (axialen Längs-) Nut 9 dargestellt, die beiderseits der Schenkel 10.1 an den Innenkanten der freien Enden 5a der längsgeschlitzten Öffnung 5 eingelassen liegt. Die Nut 9 wird zur vorbeschriebenen Auflage des Federbandes 6.1 der Rollfeder 6.7 benutzt, wobei das Federband 6.1 mit der Nut 9 der Installations- und Inspektionsöffnung 5 eine Dichtwirkung erzielt.

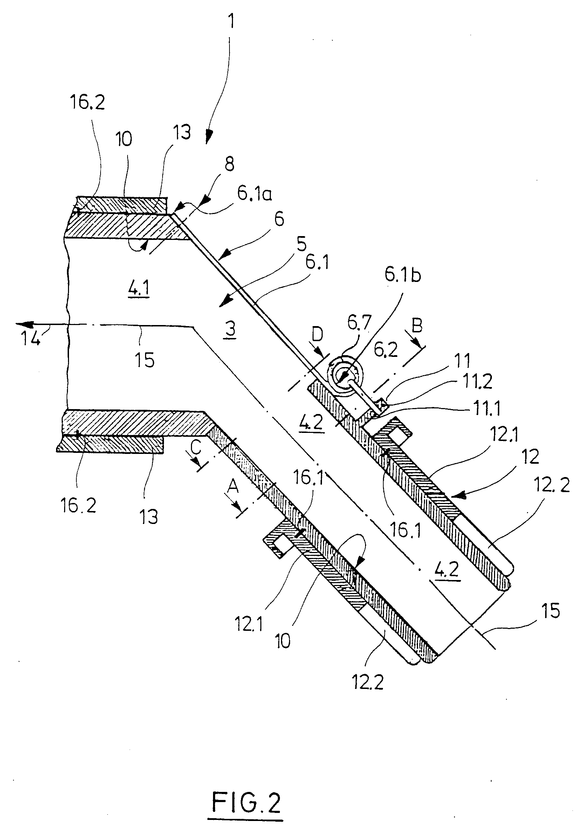

Die Fig.2 zeigt eine **zweite Ausführungsform**, bei der - gegenüber der Lösung nach Fig.1 - der Verbinders 1 im besonderen die Form eines 45 - Grad - Krümmer besitzt, bei dem der Mittelabschnitt 3 gegenüber dem ersten äußeren Randabschnitt 4.1, dem eine Überwurfmutter 13 drehbeweglich aufliegt, in diesen Anwendungswinkel abgewinkelt wird. Alle weiteren Besonderheiten, die den vorgenannten Aufbau des Verbinders 1 hinsichtlich der U- Profilgestaltung (unterhalb der Installations- und Inspektionsöffnung 5) und dem Verlauf (der Auflage) des Federbandes 6.1 der Rollfeder 6.7 in der Nut 9 (entlang der Installations- und Inspektionsöffnung 5) im Bereich des Mittelabschnittes 3 und seine Befestigung an den beiden geschlossenen Randabschnitten 4.1, 4.2 betreffen, wurden soweit im Beispiel nach den Figuren 1, 1a bis 1 näher erläutert.

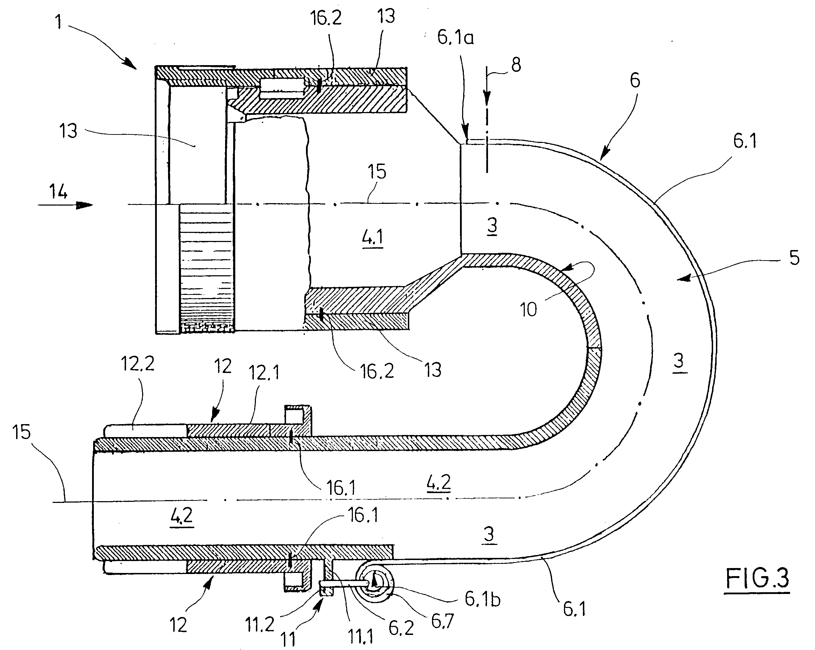

Die Fig.3 zeigt eine **dritte Ausführungsform** des beispielgemäßen Verbinder 1 nach der Fig.1, bei dem das U-Profil - am Übergang zum ersten Randabschnitt 4.1 - eine Formveränderung aufweist, wobei der Mittelabschnitt 3 mit der längsgeschlitzt eingefaßten Installations- und Inspektionsöffnung 5 eine 180 - Grad - Krümmung besitzt, dem über der gesamten Öffnung 5 das Federband 6.1 der Rollfeder 6.7 aufliegt. Alle weiteren Besonderheiten, die den vorgenannten Aufbau des Verbinders 1 hinsichtlich der U-Profilgestaltung (unterhalb der Installations- und Inspektionsöffnung 5) und dem Verlauf (der Auflage) des Federbandes 6.1 der Rollfeder 6.7 in der Nut 9 (entlang der Installations- und Inspektionsöffnung 5) im Bereich des Mittelabschnittes 3 und seine Befestigung an den beiden geschlossenen Randabschnitten 4.1, 4.2 betreffen, wurden soweit im Beispiel nach den Figuren 1, 1a bis 1 näher erläutert.

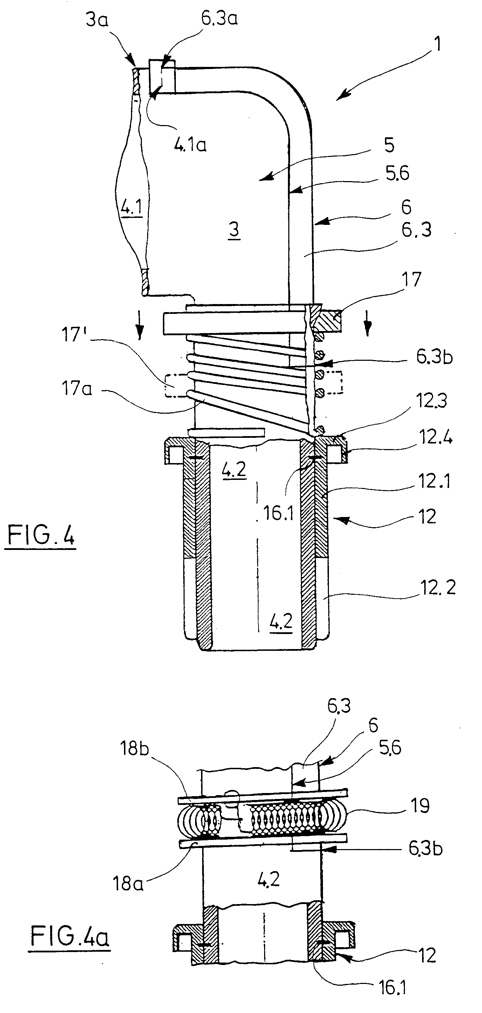

In einem **zweiten Ausführungsbeispiel** wird nach Fig.4 der Verbinder 1 eines Schutzschlauchsystems mit Zugang für (nicht gezeigte) innenverlegte elektrische Leitungen 7 im Flugzeug näher beschrieben. Danach besteht der Verbinder 1 aus einem metallenen Grundkörper, der beispielgemäß die Form eines 90 - Grad - Krümmers aufweist. Ähnlich dem Aufbau des Verbinders 1 nach Fig.1 (erstes Ausführungsbeispiel) befindet sich zwischen den beiden äußeren Randabschnitten 4.1, 4.2 des Grundkörpers ein Mittelabschnitt 3. Die Randabschnitte 4.1, 4.2 sind axial geschlossen ausgeführt, wogegen der Mittelabschnitt 3 längs einer Mittelachse 15 des Grundkörpers eine Installations- und Inspektionsöffnung 5 aufweist, die beispielgemäß als axial verlaufende (Längs-) Schlitzung (dem Verlauf der Mittelachse 15 des Grundkörpers entsprechend) ausgeführt ist und bis an den Übergang zum betreffenden Randabschnitt 4.1, 4.2 reicht. Jeweils eine metallene bizonal aufgeteilte Buchse 12 oder eine Überwurfmutter 13 lagert koaxial und drehbeweglich auf den betreffenden Randabschnitten 4.1, 4.2.
Die Lagerung der Überwurfmutter 13 auf einem ersten Randabschnitt 4.1 ist in der Fig.4 nicht dargestellt. Die Buchse 12 umgibt nach der Fig.4 beispielgemäß den anderen zweiten Randabschnitt 4.2.
Der Grundkörper und das dem jeweiligen Randabschnitt 4.1, 4.2 zugeordnete Element (Buchse 12, Überwurfmutter 13) sind mittels je einem metallenen Sprengring 16.1, 16.2 fest und unverlierbar zueinander fixiert, wobei diese sich jeweils in einer separat eingelassenen Nut, die in die zueinander liegenden (geschlossen ausgeführten) Auflageflächen der zueinander drehbeweglich gelagerten Körper eingearbeitet ist, befinden. Der Grundkörper und die Überwurfmutter 13 oder die Buchse 12 liegen (infolge der Sprengringfixierung) immer drehbeweglich zueinander.
Die (nicht dargestellte) Überwurfmutter 13, welche auf einem ersten Randabschnitt 4.1 liegen wird, würde den Grundkörper mit einem (nicht gezeigten) elektrischen Stecker 14 fixieren.
Die erwähnte Buchse 12 ist bizonal in eine axial geschlossene und axial geschlitzte Zone 12.1, 12.2 aufgeteilt. Die axial geschlitzte Zone 12.2 besteht aus mehreren schlitzartig gebildeten Elementen, die als elektrisch leitende Kontaktfedern ausgebildet sind.

Der andere zweite Randabschnitt 4.2, auf dem die Buchse 12 lagert, ist dabei mit den unter Druck gesetzten Kontaktfedern - infolge ihres radial verteilten Aufdrückens auf diesen Bereich des Grundkörpers - elektrisch leitend verbunden, wobei die den Kontaktfedern aufgeprägte Last mit radial aufgeprägter Druckverteilung wirkt.
Ein (nicht gezeigter) metallener Schutzschlauch, der auf der drehbeweglichen Buchse 12 befestigt ist, würde die elektrisch leitende Verbindung zwischen dem Verbinder 1 und einem Schutzschlauchsystem realisieren.
Das Profil des Grundkörpers soll dem beispielgemäß eingesetzten Profil nach der Fig.1 entsprechen. Es wurde (entsprechend den Ausführungen zum ersten Ausführungsbeispiel) bereits beschrieben.

Im Unterschied der Lösung nach der Fig.1 werden die beispielgemäß unterhalb der längsgeschlitzten Installations- und Inspektionsöffnung 5 installierten (nicht gezeigten) elektrischen Leitungen 7 durch einen festen Verschluß 6, der als Deckel 6.3 ausgeführt ist, gegen das Eindringen fremder Körper geschützt. Der Deckel 6.3 ist der Form des Grundkörpers als 90 - Grad - Krümmer anpaßt und liegt der Installations- und Inspektionsöffnung 5 auf. Er überdeckt gänzlich die Öffnung 5 und bildet entlang der Installations- und Inspektionsöffnung 5 mit den Kanten der freien Enden des längsgeschlitzten Profiles des Mittelabschnittes 3 eine Teilfuge 5.6. Es handelt sich um einen Deckel 6.3, der sich mit den nachstehend beschriebenen Elementen ver- und entriegeln läßt. Er kann somit der Öffnung 5 beliebig abgenommen und aufgelegt werden.
Dabei wird das erste freie Ende 6.3a des Deckels 6.3 einer Führung 3a aufgelegt, die sich nahe dem Beginn der Installations- und Inspektionsöffnung 5, welcher sich der erste Randabschnitt 4.1 anschließt, befindet. Die Führung 3a ist als - teilweise dem ersten Randabschnitt 4.1 kreisumfänglich eingelassene - (Teil-) Nut 4.1a ausgeführt, der dieser Deckelabschnitt aufliegt. Das zweite freie Ende 6.3b des Deckels 6.3 wird durch einen federbelasteten Druckring 17 nahe dem Ende der Öffnung 5, welcher sich der zweite Randabschnitt 4.2 anschließt, festgehalten. Der Druckring 17 läßt sich axial auf der Außenwandung des Grundkörpers (des Mittelabschnittes 3) - zwischen dem Öffnungsrand am Ende der Öffnung 5 (als Druckring 17' dargestellt) und dem Beginn einer 90 - Grad - Krümmung des Mittelabschnittes 3 (als Druckring 17 dargestellt) - bewegen.

Ihm wird durch eine Druckfeder 17a, die der Stirnseite des Druckringes 17 anliegt, in axialer Richtung die notwendige Druckkraft zum Fixieren (Verriegeln) des anderen Deckelabschnittes verliehen. Dabei besitzen die Innenwandung des Druckringes 17 und die Außenwandung am zweiten Ende 6.3b des Deckels 6.3 und die Außenwandung des zweiten Randabschnittes 4.2 nahe dem genannten Ende der Installations- und Inspektionsöffnung 5 umfänglich eine Kegelform, wodurch diese Wandungen an dieser Stelle durch die aufeinander liegenden Kegelabschnitte des Deckels 6.3 und des Mittelabschnittes 3 - infolge der ausgeübten Federkraft der Druckfeder 17a auf den Druckring 17 - zueinander geklemmt (verriegelt) werden. Die Aufhebung der Verriegelung des Deckels 6.3 geschieht durch entgegengesetztes axiales Drücken der Druckfeder 17a mit Hand, wodurch sich (durch Umkehr des Vorganges) der Druckring 17 in Richtung der gespannten Feder 17a bewegt und die Verklemmung der vorgenannten Kegelhälften aufgehoben wird.

Die Fig.4a zeigt eine **weitere Ausführungsform**, bei der dem Deckel 6.3 und dem zweiten Randabschnitt 4.2 (des so modifizierten Verbinders nach Fig.4) nahe der Deckelauflage je ein Teilflansch 18a, 18b aufgesetzt ist. Zwischen den parallel zueinander stehenden Stirnflächen der beiden Teilflansche 18a, 18b liegt eine Zugfeder 19, die kreisbogenförmig den mit dem Deckel 6.3 verschlossenen Mittelabschnitt 3 umspannt. Ein erstes Ende der Zugfeder 19, die als Schraubenfeder ausgeführt ist, wird unverlierbar an einem der beiden Teilflansche 18a, 18b befestigt. Das verbleibende zweite Ende der Zugfeder 19 wird dem ersten Ende unterhakt, so daß es sich bequem abnehmen läßt. Sofern das zweite Ende vom ersten Ende abgehakt wird, befindet sich die Zugfeder 19 im gelösten entspannten Zustand, wodurch sich der Deckel 6.3 dem Mittelabschnitt 3 abnehmen läßt. Die drehbewegliche Lagerung der Überwurfmutter 13 und der Buchse 12 entspricht der vorbeschriebenen Anordnung nach Fig.4.

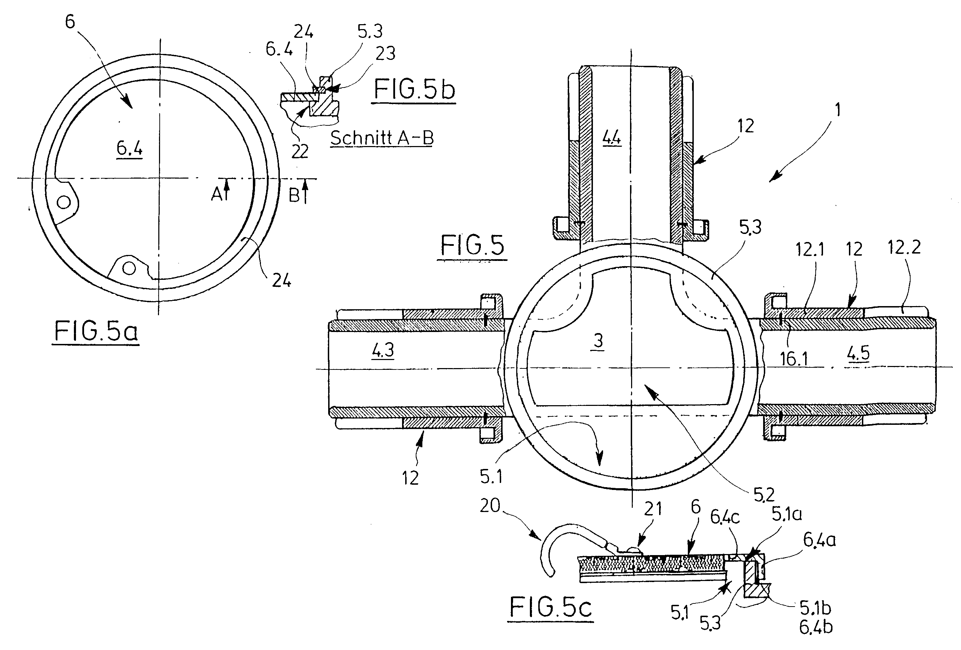

In einem **dritten Ausführungsbeispiel** wird nach Fig.5 der Verbinder 1 eines Schutzschlauchsystems mit Zugang für (nicht gezeigte) innenverlegte elektrische Leitungen 7 im Flugzeug näher beschrieben. Der Verbinder 1 ist beispielgemäß ein Kabelabzweiger, dessen Mittelabschnitt 3 an der Oberkante 5.1a eines Ringelementes 5.3 einen kreisförmigen Öffnungsbereich 5.1 aufspannt. Das Ringelement 5.3 ist dem Mittelabschnitt 3 einstückig angeformt. Unterhalb des Öffnungsbereiches 5.1 befindet sich eine Installations- und Inspektionsöffnung 5.2 des Mittelabschnittes 3. Dem Mittelabschnitt 3 sind beispielgemäß drei geschlossene Randabschnitte 4.3, 4.4, 4.5 ausgangs der Installations- und Inspektionsöffnung 5.2 abgezweigt, auf denen jeweils koaxial und drehbeweglich eine bizonal aufgeteilte Buchse 12 nach der (mehrfach) vorbeschriebenen Art lagert. Die innerhalb des Mittelabschnittes 3 (nicht gezeigten) verlegten elektrischen Leitungen 7 werden durch einen Deckel 6.4 nach der Fig.5a gegen das Eindringen fremder Körper geschützt, der eine kreisrunde Gestalt besitzt. Er überdeckt gänzlich den Öffnungsbereich 5.1 und ist dem Ringelement 5.3 jederzeit abnehmbar.

Aus der Fig.5a ist zudem erkennbar, daß der Deckels 6.4 als kreisrunde ebenflächige Scheibe mit einem Seegerring 24 gesichert wird.

Nach der Fig.5b, die den Schnitt A - B nach der Fig.5a wiedergibt, liegt der Deckel 6.4 unterhalb der Oberkante 5.1a einer nach innen gerichteten Auflage 22, die der Innenwandung des Ringelementes 5.3 angesetzt ist, auf. Die Sicherung des Deckels 6.4 geschieht mit Hilfe des in der Fig.5a gezeigten Seegerringes 24. Dabei ist unterhalb der Oberkante 5.1a an der Innenwandung des Ringelementes 5.3 die vorgenannte Auflage 22 fest angesetzt. Oberhalb der Auflage 22 ist in die Innenwandung des Ringelementes 5.3 eine Ringnut 23 eingelassen, wobei der Abstand zwischen Auflage 22 und Ringnut 23 der Dicke des Deckels 6.4 entspricht. Mit dem Seegerring 24, welcher sich in die Ringnut 23 einsetzen läßt, wird der Deckel 6.4 auf der Auflage 22 fixiert.

Eine weitere Möglichkeit der Verschließung des vorgenannten Öffnungsbereiches 5.1 gemäß der vorbeschriebenen Ausführungsmöglichkeit ergibt sich aus der nach Fig.5c dargestellten Ausführungsform. Bei dieser Ausführung bleibt insofern die konstruktive Gestaltung des Verbinders 1 als Kabelabzweiger erhalten - mit der Ergänzung, daß der Deckel 6.4c mit einer Gewindeverschraubung am Ringelement 5.3 fixiert wird. Dabei befindet sich unmittelbar unterhalb der Oberkante 5.1a auf der Außenwandung des Ringelementes 5.3 ein Außengewinde 5.1b, daß sich mit dem Innengewinde 6.4b der kreisförmigen Deckelwandung 6.4a des kappenförmigen Deckels 6.4c verschrauben läßt. Weiterhin befindet sich oberhalb und mittig dem Deckel 6.4c ein Loch. In dieses Loch wird mittels einem Verbindungselement 21 eine flexible Verbindung 20 fest fixiert. Die flexible Verbindung 20 soll den Deckel 6.4c gegen ein Verlieren sichern und wird deshalb an der verschraubten Deckelwandung 6.4a des Kabelabzweigers außen fixiert.

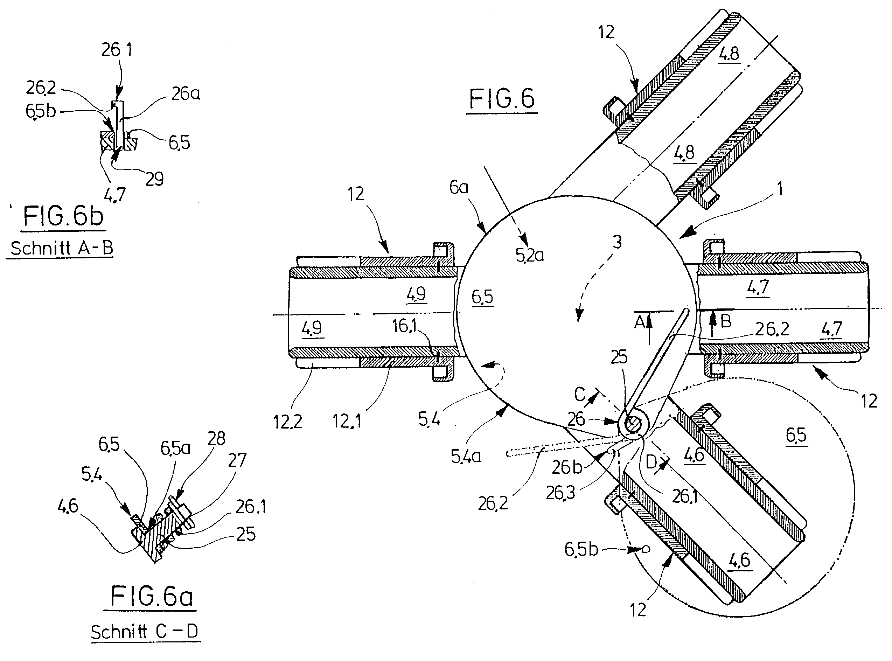

In einem **vierten Ausführungsbeispiel** wird nach Fig.6 der Verbinder 1 als Kabelabzweiger eines Schutzschlauchsystems mit Zugang für (nicht gezeigte) innenverlegte elektrische Leitungen 7 im Flugzeug vorgestellt.
Der Verbinder 1 ähnelt der Gestalt des nach Fig.5 vorgestellten Kabelabzweigers. Beispielgemäß besitzt er vier geschlossene Randabschnitte 4.6, 4.7, 4.8, 4.9, die dem Mittelabschnitt 3 abgezweigt sind. Die mehrfach vorgenannte Buchse 12 lagert dabei drehbeweglich auf je einem Randabschnitt 4.6, 4.7, 4.8, 4.9. Der Mittelabschnitt 3 spannt an seiner Oberkante 5.4a kreisflächig einen Öffnungsbereich 5.4 auf. Das (nicht gezeigte) Ringelement ist dem Mittelabschnitt 3 einstückig angeformt. Unterhalb des Öffnungsbereiches 5.4 befindet sich eine Installations- und Inspektionsöffnung 5.2a des Mittelabschnittes 3. Die innerhalb des Mittelabschnittes 3 verlegten elektrischen Leitungen 7 werden durch einen Deckel 6.5, der oberhalb des Öffnungsbereiches 5.4 horizontal verschwenkbar angeordnet ist und diese verschließt, gegen das Eindringen fremder Körper geschützt. Einem der Randabschnitte 4.6 ist nahe des Öffnungsbereiches 5.4 fest ein Bolzen 25 aufgesetzt. Der Bolzen 25 steht lotrecht zur Randebene des Öffnungsbereiches 5.4 und mittig der Breite des genannten Randabschnittes 4.6. Der Deckel 6.5, der als nahezu kreisrunde Scheibe den Öffnungsbereich 5.4 gänzlich zudeckt, besitzt nahe dem Deckelrand (gemäß Schnitt C - D) ein Loch 6.5a. Innerhalb dieser Lochführung liegt der Deckel 6.5 dem befestigten Bolzenansatz (horizontal) verschwenkbar auf.

Oberhalb des Deckels 6.5 liegt eine den Bolzen 25 umgebende Schenkelfeder 26.1, die mit einer ihr (nach Fig.6a) aufliegenden Scheibe 27 mittels einer Splintsicherung 28 am Bolzenende gesichert ist. Das freie Ende 26a des längeren Federschenkel 26.2 ist letzterem rechtwinklig abgewinkelt. Der Deckel 6.5, weist außerdem nahe dem Deckelrand (unweit dem vorgenannten Loch 6.5a) ein weiteres Loch 6.5b auf. Dabei wird das abgewinkelte freie Ende 26a des längeren Federschenkels 26.2 durch dieses weitere Loch 6.5b geführt und (nach Fig. 6b) in einem separaten Loch 29, das auf einem - dem vorgenannten bolzentragenden Randabschnitt 4.6 nahegelegenen - weiteren abgezweigten Randabschnitt 4.7 liegt, eingeführt, wodurch der Deckel 6.5 verriegelt wird. Das andere freie Ende 26b der Schenkelfeder 26.1 mit einem kürzeren Federschenkel 26.3 ist am Rand des bolzentragenden Randabschnittes 4.6 in einem Loch fest fixiert.

Mit dieser Befestigungsart der vorgespannten Schenkelfeder 26.1, bei der in diesem Zustand der Deckel 6.5 vollständig den Öffnungsbereich 5.4 aufliegt und diesen verschließt und verriegelt, läßt sich der Deckel 6.5 horizontal des Öffnungsbereiches 5.4 verschwenken. Dabei erfolgt die Verschenkung des Deckels 6.5 - oberhalb der drehbeweglich gelagerten Buchsen 12 - in Richtung des kürzeren Federschenkels 26.3 der Schenkelfeder 26.1, wodurch die Installations- und Inspektionsöffnung 5.2a sichtbar wird. Die punktgestrichelte Darstellung zeigt die Position des Deckels 6.5 mit dem längeren Federschenkels 26.2 im geöffneten Zustand an. Die horizontale Verschwenkung des längeren Federschenkels 26.2 wird (nach seiner Entriegelung) durch die Rückstellkraft der Schenkelfeder 26.1 erzeugt.

Die Fig.6a zeigt den Verbinder 1 als Kabelabzweiger im Schnitt C - D nach Fig.6. Aus dieser Darstellung läßt sich die Auflage der Schenkelfeder 26.1 am Rand des Öffnungsbereiches 5.4 auf dem Randabschnitt 4.6 und deren Fixierung am Bolzen 25 erkennen. Die Sicherung der dargestellten Federwindungen mit einer am Bolzenrand befindlichen Splintsicherung 28, der man eine den Federwindungen aufliegende Scheibe 27 vorlagert, ist mit dargestellt. Durch die Anordnung nach Fig.6a wird der Deckel 6.5 auf dem Öffnungsbereich 5.4 gedrückt, wodurch der Deckel 6.5 auf der Oberkante 5.1a eine Dichtwirkung erzielt.

Die Fig.6b zeigt den Verbinder 1 als Kabelabzweiger im Schnitt A - B nach Fig.6. Aus dieser Darstellung läßt sich die Unterführung des abgewinkelten langen Schenkelendes 26a durch den Deckel 6.5 und dessen Verriegelung im separaten Loch 29 des weiteren abgezweigten Randabschnittes 4.7 erkennen.

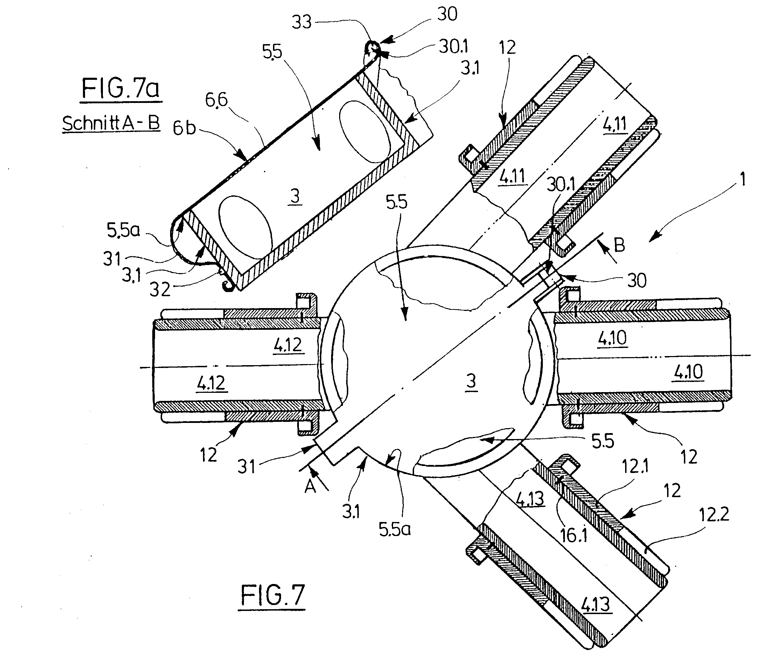

In einem **fünften Ausführungsbeispiel** wird nach Fig.7 der Verbinder 1 als Kabelabzweiger eines Schutzschlauchsystems mit Zugang für (nicht gezeigte) innenverlegte elektrische Leitungen 7 im Flugzeug vorgestellt.
Der Verbinder 1 als Kabelabzweiger ähnelt der Gestalt des nach Fig.6 vorgestellten Kabelabzweigers - mit dem Unterschied, daß der Mittelabschnitt 3 eine dosenförmige Gestalt aufweist. Beispielgemäß besitzt er vier geschlossene Randabschnitte 4.10, 4.11, 4.12, 4.13, die dem Mittelabschnitt 3 abgezweigt sind. Die mehrfach vorgenannte Buchse 12 lagert dabei drehbeweglich auf je einem Randabschnitt. Der Mittelabschnitt 3 ist (nach Fig.7a) dosenförmig ausgebildet und weist eine kreisflächige Installations- und Inspektionsöffnung 5.5 auf. Die innerhalb des Mittelabschnittes 3 verlegten elektrischen Leitungen 7 werden durch einen kreisrunden Deckel 6.6, der oberhalb der Öffnung 5.5 angeordnet ist und diese verschließt, gegen das Eindringen fremder Körper geschützt.
Der Deckel 6.6 stellt eine ebenflächige Scheibe dar. Er besitzt ein Scharniergelenk 30, welches an der Außenwandung des Mittelabschnittes 3 unterhalb der Oberkante 5.5a außerhalb der Öffnung 5.5 zwischen zwei abgezweigten Randabschnitten 4.10, 4.11 befestigt ist. Gegenüberliegend dem Scharniergelenk 30 ist dem Deckelrand ein flexibler (federnder) Verschlußstreifen 31 angeformt, der sich an der Außenwandung 3.1 unterhalb der Oberkante 5.5a verriegeln läßt.

Die Drehachse 30.1 des Scharniergelenkes 30 befindet sich oberhalb der Oberkante 5.5a und nahe dem Deckelrand, so daß der Deckel 6.6 auf der Oberkante 5.5a aufliegen und die Installations- und Inspektionsöffnung 5.5 des Mittelbereiches 3 verschließen kann.

Aus der Fig.7a, die den Schnitt A - B der Fig.7 darstellt, kann man entnehmen, daß der Verschlußstreifen 31 am Deckel 6.6 rechtwinklig angesetzt ist. Der Verschlußstreifen 31 besitzt gegenüber der Außenwandung 3.1 des Mittelabschnittes 3 eine halbkreisförmig gebogene Gestalt, wobei der so geformte Verschlußstreifen 31 sich der Außenwandung 3.1 abwendet.

Ein der Außenwandung 3.1 angesetzter Stift 32, der sich im definierten Abstand zur Oberkante 5.5a unterhalb dieser befindet, dient dazu, um den ihn (den Stift 32) durch ein nahe dem freien Ende des Verschlußstreifens 31 gelegenes Loch zu führen, weshalb durch Schnappwirkung der Verschlußstreifen 31 über den Stift 32 rastet.
Dadurch wird der dem Scharniergelenk 30 drehbeweglich gelagerte und somit klappbar ausgeführte Deckel 6.6, verriegelt. Bei dieser drehbeweglichen Fixierung des Deckels 6.6 liegt auf der Drehachse 30.1 des Scharniergelenkes 30 ein Bolzen 33.

**Zusammenfassend wird erwähnt**, daß die beispielgemäßen Verbinder 1 für den Flugzeugbau erhebliche Vorteile erbringen. Sie besitzen Installations- und Inspektionsöffnungen 5, 5.2, 5.2a, 5.5, die für den Zugang der installierten elektrischen Leitungen 7 während des Betriebes und ohne die Demontage des Blitzschutzsystems im Flugzeug innerhalb des Verbinders 1 eine große Bedeutung besitzt. Die elektrischen Leitungen 7 können durch diese Öffnungen 5, 5.2, 5.2a, 5.5 außerdem mühelos in die entsprechenden Richtungen innerhalb der Verbinder 1 eingefädelt werden. Zusätzlich sind in praxi am Boden der Öffnungen 5, 5.2, 5.2a, 5.5 mehrere Schlitzpaare für die Aufnahme von Kabelbindern vorgesehen, mit denen die Befestigung der elektrischen Leitungen 7 sachgemäß erfolgt. Die oberen Kanten der Öffnungen 5, 5.2, 5.2a, 5.5 weisen längsgeschlitzte oder kreisförmige Querschnitte auf, die mit entsprechenden Verschlüssen (Federband 6.1 einer Rollfeder 6.7 oder verschiedenartigen Deckelformen) vorwiegend unverlierbar verschlossen sind.
Durch diese Deckelgestaltung(en) kann ein beliebiges Öffnen und Schließen der Installations- und Inspektionsöffnungen 5, 5.2, 5.2a, 5.5 während der Fertigung eines Flugzeuges und im Flugzeugbetrieb mit minimalem Aufwand durchgeführt werden. Bei Störungen, Fehlersuche und Reparatur im System sind diese Öffnungen 5, 5.2, 5.2a, 5.5 somit für den Flugzeughersteller und -halter gleichermaßen von großer Bedeutung.

### Bezugszeichen

- 1: Verbinder
- 3: Mittelabschnitt
- 3a: Führung
- 3.1: Außenwandung
- 4.1, 4.2: Randabschnitt
- 4.3, 4.4: Randabschnitt
- 4.5: Randabschnitt
- 4.6, 4.7: Randabschnitt
- 4.8, 4.9: Randabschnitt
- 4.10, 4.11: Randabschnitt
- 4.12, 4.13: Randabschnitt
- 4.1a: Nut
- 5: Öffnung, Installations- und Inspektionsöffnung
- 5a: freies Ende
- 5.1: Öffnungsbereich
- 5.1a: Oberkante
- 5.1b: Außengewinde
- 5.2: Öffnung, Installations- und Inspektionsöffnung
- 5.2a: Öffnung; Installations- und Inspektionsöffnung
- 5.3: Ringelement
- 5.4: Öffnungsbereich
- 5.4a: Oberkante
- 5.5: Öffnung; Installations- und Inspektionsöffnung
- 5.5a: Oberkante
- 5.6: Teilfuge
- 6: Verschluß
- 6a: Verschluß
- 6b: Verschluß
- 6.1: Federband
- 6.1a, 6.1b: freies Ende
- 6.2: Öse
- 6.3: Deckel
- 6.3a, 6.3b: freies Ende
- 6.4: Deckel
- 6.4a: Deckelwandung
- 6.4b: Innengewinde
- 6.4c: Deckel
- 6.5: Deckel
- 6.5a: Loch
- 6.5b: Loch
- 6.6: Deckel
- 6.7: Rollfeder
- 7: Leitungen, isoliert, elektrisch
- 7.1: Kabelbinder
- 7.2: Schlitze
- 8: Verbindungselement
- 9: Nut
- 10: Innenwandung; U-förmige oder C-förmige Profilform
- 10.1: Schenkel des U-Profiles
- 10.2: Deckprofil, Flachprofil
- 11: Haken
- 11.1: Flanschansatz
- 11.2: Ansatzstück
- 12: Buchse, bizonal geteilt
- 12.1: axial geschlossene Zone
- 12.2: axial geschlitzte Zone
- 13: Überwurfmutter
- 14: Stecker, elektrisch (nicht gezeigt)
- 15: Mittelachse des Grundkörpers
- 16.1, 16.2: Federring
- 17, 17': Druckring
- 17a: Druckfeder
- 18a, 18b: Teilflansch
- 19: Zugfeder; Schraubenfeder
- 20: Befestigungselement, flexibel
- 21: Verbindungselement
- 22: Auflage
- 23: Ringnut
- 24: Seegerring
- 25: Bolzen
- 26: Druckfeder
- 26.1: Schenkelfeder
- 26a: freies Ende
- 26b: freies Ende
- 26.2: längerer Federschenkel
- 26.3: kürzerer Federschenkel
- 27: Scheibe; Unterlegscheibe
- 28: Splint(sicherung)
- 29: Loch
- 30: Scharniergelenk
- 30.1: Drehachse
- 31: Verschlußstreifen
- 32: Stift
- 33: Bolzen

## Patentansprüche

1. **Verbinder eines Schutzschlauchsystems mit Zugang für innenverlegte Leitungen im Flugzeug**, bestehend aus einem Grundkörper, dessen Querschnitt zur Aufnahme von gebündelten isolierten elektrischen Leitungen vorgesehen ist, wobei in den Grundkörper eine verschließbare Öffnung eingefaßt ist,
**dadurch gekennzeichnet**, daß
der Grundkörper mehrere Abschnitte aufweist, dessen Mittelabschnitt (3) mit einer längsgeschlitzten Öffnung (5) versehen ist, wobei der Mittelabschnitt (3) wenigstens zwischen zwei geschlossenen Randabschnitten (4.1, 4.2) liegt, die sich nach der Öffnung (5) anschließen, und daß die innerhalb des Mittelabschnittes (3) verlegten elektrischen Leitungen (7) durch einen unverlierbaren flexiblen Verschluß (6), der oberhalb der Öffnung (5) angeordnet ist, gegen das Eindringen fremder Körper geschützt sind.

2. **Verbinder nach Anspruch 1, dadurch gekennzeichnet**, **daß** der Verschluß (6) aus dem Federband (6.1) einer Rollfeder (6.7) besteht, wobei das Federband (6.1) die Öffnung (5) gänzlich überdeckt.

3. **Verbinder nach den Ansprüchen 1 und 2, dadurch gekennzeichnet**, **daß** ein freies Ende (6.1a) des Verschlußes (6) an einem Randabschnitt (4.1) nahe dem Anfang der Öffnung (5) befestigt ist, und daß das ausgerollte zweite Ende (6.1b) des Verschlußes (6), welches eine lose Öse (6.2) besitzt, am anderen Randabschnitt (4.2) nahe dem Ende der Öffnung (5) mittels der Öse (6.2) an einem Haken (11), der dem anderen Randabschnitt (4.2) flanschartig fest aufsitzt, fixiert ist.

4. **Verbinder nach Anspruch 1, dadurch gekennzeichnet**, **daß** der Verschluß (6) entlang der Öffnung (5) in einer Nut (9) geführt ist und ihr aufliegt, wobei die Nut (9) an den Innenkanten der freien Enden (5a) der längsgeschlitzten Öffnung (5) eingelassen ist.

5. **Verbinder nach Anspruch 2, dadurch gekennzeichnet**, **daß** das Federband (6.1) die Rollfeder (6.7) sich durch seine eigene Federrückstellkraft selbständig durch Einrollen in Ausgangsposition bringt.

6. **Verbinder nach Anspruch 2, dadurch gekennzeichnet**, **daß** das Federband (6.1) der Rollfeder (6.7) eben oder leicht gewölbt ausgebildet ist.

7. **Verbinder eines Schutzschlauchsystems mit direktem Zugang für innenverlegte Leitungen im Flugzeug**, bestehend aus einem Grundkörper, dessen Querschnitt zur Aufnahme von gebündelten isolierten elektrischen Leitungen vorgesehen ist, wobei in den Grundkörper eine verschließbare Öffnung eingefaßt ist,
**dadurch gekennzeichnet**, **daß**
der Grundkörper mehrere Abschnitte aufweist, dessen Mittelabschnitt (3) mit einer längsgeschlitzten Öffnung (5) versehen ist, wobei der Mittelabschnitt (3) wenigstens zwischen zwei geschlossenen Randabschnitten (4.1, 4.2) liegt, die sich nach der Öffnung (5) anschließen, und daß die innerhalb des Mittelabschnittes (3) verlegten elektrischen Leitungen (7) durch einen unverlierbaren massiven Verschluß (6), der oberhalb der Öffnung (5) angeordnet ist, gegen das Eindringen fremder Körper geschützt sind.

8. **Verbinder nach Anspruch 7, dadurch gekennzeichnet, daß** der Verschluß (6) aus einem abnehmbaren Deckel (6.3) besteht, wobei der Deckel (6.3) die Öffnung (5) gänzlich überdeckt.

9. **Verbinder nach Anspruch 7, dadurch gekennzeichnet, daß** ein erstes freies Ende (6.3a) des Verschlußes (6) auf dem einem Randabschnitt (4.1) nahe dem Anfang der Öffnung (5) in einer Nut (4.1a) geführt ist und ihr aufliegt, und daß ein zweites Ende (6.3b) des Verschlußes (6) durch einen federbelasteten beweglichen Druckring (17), der dem anderen Randabschnitt (4.2) nahe dem Ende der Öffnung (5) aufliegt, festgehalten ist, wobei eine Druckfeder (17a), die axial geführt dem Mittelabschnitt (3) inclusive dem die Öffnung (5) verschließenden Verschluß (6) beweglich aufliegt, am Druckring (17) anliegt und im vorgespannten Zustand den Druckring (17) am Verschluß (6) fixiert.

10. **Verbinder nach Anspruch 7, dadurch gekennzeichnet, daß** die Innenwandung des Druckringes (17) und die Außenwandung am zweiten Ende (6.3b) des Verschlußes (6) und die Außenwandung des anderen Randabschnittes (4.2) nahe dem Ende der Öffnung (5) teilweise eine Kegelform besitzen, und daß diese Wandungen an dieser Stelle durch die aufeinander liegenden Kegelflächen zueinander geklemmt sind.

11. **Verbinder nach Anspruch 7, dadurch gekennzeichnet, daß** auf dem zweiten Ende (6.3b) des Verschlußes (6) und auf dem anderen Randabschnitt (4.2) nahe dem Ende der Öffnung (5) jeweils teilweise ein Flansch (18a, 18b) angeordnet ist, wobei zwischen den beiden parallel zueinander stehenden Stirnflächen der Flansche (18a, 18b) unverlierbar eine Zugfeder (19) liegt.

12. **Verbinder eines Schutzschlauchsystems mit Zugang für innenverlegte Leitungen im Flugzeug**, bestehend aus einem Grundkörper, dessen Querschnitt zur Aufnahme von gebündelten isolierten elektrischen Leitungen vorgesehen ist, wobei in den Grundkörper eine verschließbare Öffnung eingefaßt ist,
**dadurch gekennzeichnet**, **daß**
der Grundkörper mehrere Abschnitte aufweist, dessen Mittelabschnitt (3), dem ein Ringelement (5.3) einstückig angeformt ist, an der Oberkante (5.1a) des Ringelementes (5.3) eine kreisflächige Öffnung (5.1) aufspannt, wobei dem Mittelabschnitt (3) mehrere geschlossene Randabschnitte, wenigstens drei Randabschnitte (4.3, 4.4, 4.5), abgezweigt sind, die sich einem unterhalb der Öffnung (5.1) befindlichen Öffnungsbereich (5.2), der sich im Mittelabschnitt (3) aufspannt, anschließen, und daß die innerhalb des Mittelabschnittes (3) verlegten elektrischen Leitungen (7) durch einen kreisflächigen Verschluß (6), der im Bereich der Öffnung (5.1) angeordnet ist, gegen das Eindringen fremder Körper geschützt sind.

13. **Verbinder nach Anspruch 12, dadurch gekennzeichnet, daß** der Verschluß (6) aus einem abnehmbaren Deckel (6.4) besteht, der im Bereich der Oberkante (5.1a) dem Ringelement (5.3) aufliegt und die Öffnung (5.1) gänzlich überdeckt.

14. **Verbinder nach den Ansprüchen 12 und 13,**
**dadurch gekennzeichnet**, **daß** der als Deckel (6.4c) ausgeführte Verschluß (6) eine Kappenform besitzt, dessen Deckelwandung (6.4a) mit einem Innengewinde (6.4b) versehen ist, und daß das Ringelement (5.3) unterhalb der Oberkante (5.1a) mit einem Außengewinde (5.1b) versehen ist, wobei sich das Innengewinde (6.4b) der Deckelwandung (6.4a) mit dem Außengewinde (5.1b) des Ringelementes (5.3) verschrauben läßt.

15. **Verbinder nach den Ansprüchen 12 und 13,**
**dadurch gekennzeichnet**, **daß** sich in der Mitte des als Deckel (6.4c) ausgeführten Verschlußes (6) auf dessen Außenfläche ein Ende eines flexiblen Befestigungselementes (20) mit einem Verbindungselement (21) befestigt ist, welches den Deckel (6.4c) mit seinem zweiten Ende unterhalb der Oberkante (5.1a) und dem Außengewinde (5.1b) am Ringelement (5.3) flexibel und unverlierbar fixiert, wobei ein mittig dem Deckel (6.4c) angeordnetes Loch das Verbindungselement (21) aufnimmt, welches den Deckel (6.4c) gegen ein Verlieren sichert.

16. **Verbinder nach Anspruch 12, dadurch gekennzeichnet, daß** unterhalb der Oberkante (5.1a) an der Innenwandung des Ringelementes (5.3) eine Auflage (22) fest angesetzt ist, und daß oberhalb der Auflage (22) in die Innenwandlung des Ringelementes (5.3) ein Ringnut (23) eingelassen ist.

17. **Verbinder nach einem der Ansprüche 12 bis 16,**
**dadurch gekennzeichnet**, **daß** der als Deckel (6.4) ausgeführte Verschluß (6) eine kreisrunde ebenflächige Scheibe darstellt, der ein Seegerring (24) aufliegt, welcher sich in die Ringnut (23) einsetzen läßt.

18. **Verbinder eines Schutzschlauchsystems mit direktem Zugang für innenverlegte Leitungen im Flugzeug**, bestehend aus einem Grundkörper, dessen Querschnitt zur Aufnahme von gebündelten isolierten elektrischen Leitungen vorgesehen ist, wobei in den Grundkörper eine verschließbare Öffnung eingefaßt ist,
**dadurch gekennzeichnet**, **daß**
der Grundkörper mehrere Abschnitte aufweist, dessen Mittelabschnitt (3) an einer Oberkante (5.4a) einen kreisflächigen Öffnungsbereich (5.4) aufspannt, wobei dem Mittelabschnitt (3) mehrere geschlossene Randabschnitte abgezweigt sind, und daß die innerhalb des Mittelabschnittes (3) verlegten elektrischen Leitungen (7) durch einen unverlierbaren steifen und nahezu kreisflächigen Verschluß (6a), der oberhalb des Öffnungsbereiches (5.4) horizontal verschwenkbar angeordnet ist und diese verschließt, gegen das Eindringen fremder Körper geschützt sind.

19. **Verbinder nach Anspruch 18, dadurch gekennzeichnet, daß** einem der Randabschnitte (4.6) nahe dem Öffnungsbereich (5.4) fest ein Bolzen (25) aufgesetzt ist, der lotrecht zur Randebene des Öffnungsbereiches (5.4) steht und mittig der Breite dieses Randabschnittes (4.6) angeordnet ist, und daß der Bolzen (25) einen als Deckel (6.5) ausgeführten Verschluß (6a), der eine mit einem Loch (6.5a) versehene ebenflächige Scheibe darstellt und den Öffnungsbereich (5.4) verschließt, aufnimmt, wobei der Deckel (6.5) innerhalb des Loches (6.5a) dem Bolzenansatz aufliegt und gegenüber dem Bolzen (25) horizontal verschwenkbar lagert.

20. **Verbinder nach den Ansprüchen 18 und 19,**
**dadurch gekennzeichnet, daß** oberhalb des Deckels (6.5) eine Druckfeder (26) aufliegt, die den Bolzen (25) umhüllt und mit einer ihr nachgeordneten Scheibe (27) am Bolzenende mittels einer Splintsicherung (28) fixiert ist.

21. **Verbinder nach den Ansprüchen 18 bis 20,**
**dadurch gekennzeichnet**, **daß** die Druckfeder (26) als Schenkelfeder (26.1) ausgeführt ist, wobei ein freies Ende (26a) der Schenkelfeder (26.1), welches dem längeren Federschenkel (26.2) rechtwinklig abgewinkelt ist, durch ein weiteres Loch (6.5b) des Deckels (6.5) geführt und in einem separaten Loch (29), das auf einem nahegelegenen abgezweigten weiteren Randabschnitt (4.7) liegt, der dem bolzentragenden Randabschnitt (4.6) am nächsten abzweigt, eingeführt ist, wodurch der Deckel (6.5) verriegelt wird, und daß ein anderes freies Ende (26b) der Schenkelfeder (26.1), welches dem kürzeren Federschenkel (26.3) zugeordnet ist, am Rand des bolzentragenden Randabschnittes (4.6) in einem Loch fest fixiert ist.

22. **Verbinder eines Schutzschlauchsystems mit Zugang für innenverlegte Leitungen im Flugzeug,** bestehend aus einem Grundkörper, dessen Querschnitt zur Aufnahme von gebündelten isolierten elektrischen Leitungen vorgesehen ist, wobei in den Grundkörper eine verschließbare Öffnung eingefaßt ist,
**dadurch gekennzeichnet**, **daß**
der Grundkörper mehrere Abschnitte aufweist, dessen Mittelabschnitt (3) an einer Oberkante (5.5a) eine kreisflächige Öffnung (5.5) aufspannt, wobei dem Mittelabschnitt (3) mehrere geschlossene Randabschnitte abgezweigt sind, und daß die innerhalb des Mittelabschnittes (3) verlegten elektrischen Leitungen (7) durch einen unverlierbaren steifen und kreisflächigen Verschluß (6b), der oberhalb der Öffnung (5.5) drehbeweglich und klappbar gelagert ist und diese verschließt, gegen das Eindringen fremder Körper geschützt sind.

23. **Verbinder nach Anspruch 22, dadurch gekennzeichnet**, **daß** der Verschluß (6b) aus einem kreisrunden Deckel (6.6) besteht, der eine ebenflächige Scheibe darstellt und einseitig ein Scharniergelenk (30) aufweist, welches außerhalb der Öffnung (5.5) und unter- oder oberhalb der Oberkante (5.5a) an der Außenwandung (3.1) des Mittelabschnittes (3) befestigt ist, wobei der Mittelabschnitt (3) eine Dosenform besitzt, und daß vertikal dem Scharniergelenk (30) gegenüberliegend am Deckel (6.6) ein flexibler Verschlußstreifen (31) angeformt ist, der sich an der Außenwandung (3.1) des Mittelabschnittes (3) unterhalb der Oberkante (5.5a) lösbar verriegeln läßt.

24. **Verbinder nach Anspruch 22, dadurch gekennzeichnet**, **daß** sich die Drehachse (30.1) des Scharniergelenkes (30) unter- oder oberhalb der Oberkante (5.5a) und nahe der Deckelfläche befindet, so daß der Deckel (6.6) auf der Oberkante (5.5a) aufliegen und den Mittelbereich (3) verschließen kann.

25. **Verbinder nach den Ansprüchen 22 und 23,**
**dadurch gekennzeichnet**, **daß** der Verschlußstreifen (31) am Deckel (6.6) rechtwinklig angesetzt ist, der gegenüber der Außenwandung (3.1) des Mittelabschnittes (3) eine halbkreisförmig gebogene Gestalt besitzt, der sich der Außenwandung (3.1) abwendet, und daß der Außenwandung (3.1) ein Stift (32) angesetzt ist, der sich im definierten Abstand zur Oberkante (5.5a) unterhalb dieser befindet, wobei der Verschlußstreifen (31) nahe seinem freien Ende ein Loch aufweist, welches über den Stift (32) rastet.

26. **Verbinder nach den Ansprüchen 22 und 24,**
**dadurch gekennzeichnet**, **daß** das Scharniergelenk (30) zwischen zwei abzweigenden Randabschnitten (4.10, 4.11) angeordnet ist, wobei auf der Drehachse (30.1) des Scharniergelenkes (30) ein Bolzen (33) liegt.
